Europäisches Patentamt

European Patent Office

Office européen des brevets

(11) Publication number: 0 367 579
A2

# EUROPEAN PATENT APPLICATION

(21) Application number: 89311267.2

(22) Date of filing: 31.10.89

(51) Int. Cl.5 C08F 259/08 , C08K 5/00 , H01B 3/44

(30) Priority: 01.11.88 GB 8825497

(43) Date of publication of application:
09.05.90 Bulletin 90/19

(84) Designated Contracting States:
AT BE CH DE ES FR GB GR IT LI LU NL SE

(71) Applicant: BICC Public Limited Company
Devonshire House Mayfair Place
London W1X 5FH(GB)

(72) Inventor: Yaddehige, Sena, Dr.
6, Berkeley Road Wroughton
Swindon Wiltshire SN4 9BW(GB)
Inventor: Blythe, Anthony Reginald, Dr.
Cobblestones Church Street
Malpas Cheshire SY14 8PD(GB)

(74) Representative: Poole, Michael John et al
BICC plc Group Patents & Licensing Dept.
Network House 1, Ariel Way Wood Lane
London W12 7SL(GB)

(54) Fluorocarbon polymer composition.

(57) A composition for radiation crosslinking is based on a fluorocarbon polymer (such as tefzel) that can be melt fabricated and has a melting point or softening range above 200° C. A polyunsaturated crosslinking promoter (such as TAIC) is used, and an antioxidant (such as hydroquinone) is added in an amount sufficient to substantially prevent any oxidative polymerisation of the promoter at temperatures at least up to the melting point/softening range of the polymer for a minimum of 15 mins. Surprisingly the quantities of anti-oxidant required to substantially eliminate oxidative polymerisation do not prevent radiation crosslinking of the composition nor seriously reduce its efficiency.

# FLUOROCARBON POLYMER COMPOSITIONS

This invention relates to compositions based on fluorocarbon polymers of the class that can be melt-fabricated and have melting points (or softening ranges) above 200°C. and more particularly to compositions for cross-linking by irradiation.

As is well known, the attractive properties of fluorocarbon polymers, especially their resistance to heat and reactive chemicals, are associated directly with the stability of the C-F bond, and that very stability makes cross-linking for further enhancement of high-temperature properties difficult, in that the effect of either high energy radiation or reactive chemical species is too often to cause a chain scission or other deleterious change rather than to remove a fluorine atom to create a cross-link site. The judicious inclusion of hydrogen, chlorine or other atoms that are more easily removed from the polymer, as in polyvinylidene difloride, ethylene-tetrafluoroethylene copolymers and ethylene-chlorotrifuoroethylene copolymers, enables radiation cross-linking to be obtained, but the resulting improvements in certain properties are rather small, and it is desirable to use cross-link promoters to increase the ratio of cross-linking reactions to deleterious ones.

Unfortunately, cross-link promoters are of necessity fairly reactive compounds susceptible to oxidation and self-polymerisation, and most of them melt to form mobile liquids at temperatures well below 200°C. If they are added in a conventional manner in the hopper of an extruder (whether precoated on particles of the polymer or not), they tend oxidise and/or self-polymerise before they are sufficiently dispersed in the polymer to prevent it, and may also segregate and flow backwards in the part of the extruder where the polymer is still solid, leading to erratic and unsatisfactory results. It has been proposed (British patent 1592979) to introduce cross-link promoter by imbibing from a liquid bath after fabrication, repeating after irradiation if necessary, but our experiments with the ethylene/tetrafluoroethylene polymers sold as TEFZEL and HOSTAFLON indicate that, even with repetition, this messy process may be restricted to an aggregate promoter uptake less than the optimum for improvement in properties. We have therefore been seeking a technique by which any required quantity of a suitable promoter may be incorporated in the polymer melt.

In accordance with the present invention, a composition for radiation cross-linking based on a fluorocarbon polymer that can be melt-fabricated and has a melting point or softening range above 200°C comprises an effective amount of polyunsaturated cross-linking promoter for the polymer and an amount of an antioxidant sufficient to substantially prevent any oxidative polymerisation of the said promoter for at least 15 minutes (preferably at least 30 minutes) at temperatures at least up to the melting point or softening range of the polymer. Surprisingly, the quantities of antioxidant required to substantially eliminate oxidative polymerisation do not prevent radiation crosslinking nor seriously reduce its efficiency, perhaps because thermal cross-linking is diffusion-limited and radiation cross-linking is not.

Preferred polymer bases for the compositions of the invention are ethylene/tetrafluorethylene copolymers (sold as the one sold under the trademark TEFZEL), ethylene/chlorotrifluoro-ethylene copolymers (sold under the trademark HALAR) and polyvinylidene difluoride; mixtures of such polymers can be used.

Conventional cross-link promoters can be used, and of these we prefer triallyl isocyanurate (TAIC), triallyl cyanurate (TAC), N,N metaphenylene dimaleimide (HVA-2), triallyl trimellitate, pentaerythritol tetra acrylate and trimethylolpropane trimethacrylate. For the preferred promoters a content of around 5-20% is useful with the optimum usually in the range 7-15% (percentages being by weight of polymer).

Preferred antioxidants are of the free-radical sink type such as hydroquinone and the hindered phenol type, such as butylated hydroxytoluene (2,6di tertiary butyl p-cresol), tetrakis[methylene 3-(3',5'-di-tertiary butyl-4' hydroxy phenyl) propionate] methane, 1,1,3tris-(5-tertiary butyl-4-hydroxy 2-methyl phenyl) butane, 2,2'-methylene-bis[4-methyl-6-(2 methyl cyclohexyl) phenol], 4,4.thio-bis(3-methyl-6 tertiary butyl phenol) and 2,2 bis(4-hydroxy phenyl) propane (bisphenol A). Hydroquinone is particularly preferred. Since antioxidants vary in efficiency, the quantity required will need to be established empirically for each promoter/antioxidant pair, but will usually be several times more than would be required for conventional antioxidant stabilisation of the composition. For hydroquinone, a content in the region of 0.1 parts per hundred parts of the promoter will usually be satisfactory, at least in the case of the preferred promoters listed above.

The compositions of the invention may also include other conventional ingredients, such as pigments and in particular fire retardants (since both the promoter and the antioxidant are likely to contribute to an increased risk of fire spread). Preferred flame retardant is antimony trioxide in conventional amounts.

Wherever possible, the antioxidant should be pre-mixed with the promoter before dispersion in the polymer (since otherwise it may not reach the promoter in time to protect it adequately). Because of the problem of segregation, we prefer to inject a promoter antioxidant mixture into already plastified polymer using a cavity transfer mixer (or other rapidly-acting blender) as more fully described in another application filed on the same day as this one (Agent's reference JO379).

The compositions of the invention have been successfully cross-linked by the use of a high-energy electron beam, which has the advantage of a very short reaction time, but we believe that gamma irradiation, and other high-energy radiation techniques, can also be used.

Example 1

Hydroquinone was added at a rate of 1000 ppm to TAIC (Perkalink 301) already stabilised by the presence of 50 ppm of butylated hydroxytoluene. This mixture (9 parts by weight) was blended with TEFZEL ethylene/tetrafluoroethylene copolymer (100 parts) and antimony trioxide (5 parts) to form a composition which can be heated to 280°C for at least 20 minutes without producing any substantial permanent change in its physical properties, but can be effectively cross-linked by electron-beam irradiation at 1.5 MeV using a dose of 150 kGy.

Example 2

Ethylene tetrafluoroethylene polymer (Tefzel 200 as received and without additives) was fed to the hopper of a Betol model 1820SP extruder with a 'polythene' type screw operating at 60 rpm; the barrel was maintained at a temperature profile in which the successive zone temperatures were 280, 220 and 285°C and the clamp temperature 275°C and the polymer was plastified at a rate of about 3 kg/hr.

The hot plastified output was supplied directly to the inlet of a cavity transfer mixer in which the rotating body was uniformly 53 mm in diameter and 70 mm in length. The stator had three rows of hemispherical cavities extending round its circumference, each row comprising six cavities and each cavity having a radius of 12 mm. Axial spacing of the rows was about 22 mm and adjacent rows were staggered by one twelfth of the circumference. The rotor had a similar pattern of cavities but with four rows positioned so that each row of stator cavities was axially midway between two rows of rotor cavities, so that there is continuous overlapping. The mixer was maintained at 275°C and rotated at 60 rpm while molten TAIC, stabilised as described in Example 1, was injected under pressure at a rate of 8% of the polymer throughput using a displacement pump supplied by Atlantic Gold Engineering Limited with a pulsation damper and pressure regulator. A conventional pigment masterbatch was also fed to the same cavity transfer mixer. The output of the mixer was extruded through a 3 mm diameter die to form a continuous strand which was cooled by passing through a water trough 2 m long at 180°C. The strand was dried by a proprietory air wipe before entering a rotating blade cutter which reduced it to granules. The granules were fed into the hopper of a conventional wire-covering extruder (Maillefer 30 mm) together with a pigment masterbatch. In this way it was applied as a first coating to a stranded conductor made up of 19 silver-plated annealed copper conductors each 0.01 mm in diameter. A second layer applied over the first was of the same composition except that it was coloured white with a different pigment masterbatch in order to make the layers easily visually distinguishable. The inner blue layer had a radial thickness of 0.015 mm and the white outer layer 0.01 mm.

The wire was irradiated to a bulk dose of 150 kGy and met the main requirements of MIL-W-22759/34B.

Claims

1. A composition for radiation crosslinking based on the fluorocarbon polymer that can be melt fabricated and has a melting point or softening range above 200°C comprising an effective amount of polyunsaturated crosslinking promoter for the polymer and an amount of an anti-oxidant sufficient to substantially prevent any oxidative polymerisation of the said promoter for at least 15 minutes (preferably at least 30 minutes) at temperatures at least up to the said melting point or softening range.

2. A composition as claimed in claim 1 in which the polymer is an ethylene/tetrafluoroethylene copolymer an ethylene/chlorotrifluoroethylene copolymer or polyvinylidene fluoride.

3. A composition as claimed in claim 1 or claim 2 in which the crosslink promoter is triallyl isocyanurate, triallyl cyanurate, triallyl trimellitate, pentaerythritol tetra-acrylate or trimethylol propane trimethacrylate.

4. A composition as claimed in any one of the preceding claims in which the antioxidant is of free-radical sink type.

5. A composition that is claimed in claim 4 in which the anti-oxidant is selected from hydroquinone, butylated hydroxytoluene (2.6di-Tertiary butyl p-cresol), tetrakis[methylene e-(3´,5´-di-tertiary butyl-4´hydroxy phenyl) propionate methane, 1,1,3tris-(5-tertiary butyl-4-hydroxy 2-methyl phenyl) butane, 2,2-methylene-bis[4-methyl-6-(2 methyl cyclohexyl) phenol], 4.4´thio-bis(3-methyl-6 tertiary butyl phenol) and 2,2 bis(4-hydroxy phenyl) propane (bisphenol A).

6. An electric wire coated with a composition claimed in any one of claims 1-5 crosslinked by electron beam irradiation.